# EUROPEAN PATENT APPLICATION

(11) **EP 4 411 934 A2**
(43) Date of publication of application: **07.08.2024**
(21) Application number: 24151401.7
(22) Date of filing: 11.01.2024
(51) Int. Cl.: H01M 10/46, H01M 50/202, H01M 50/249, H01M 50/296, H01M 50/298, H01M 50/502, H02J 7/00, H01M 10/04, H01M 50/204, H01M 50/213, H01M 50/247, H01M 50/514, H01M 50/548

(54) **BIDIRECTIONAL RECHARGEABLE BATTERY PACK, DRONE HAVING THE SAME, AND BATTERY PACK CHARGING STATION**

(30) Priority: 16.01.2023 KR 20230006133
(71) Applicant: Samsung SDI Co., Ltd., Yongin-si, Gyeonggi-do 17084 (KR)
(72) Inventor: JANG, Sang Hun, 17084 Yongin-si (KR)
(74) Representative: Marks & Clerk LLP

(57) **Abstract**

A battery pack includes: a battery cell including a negative electrode and a positive electrode; a case accommodating the battery cell; and a pair of cap assemblies at both ends of the case. Each of the cap assemblies includes a first cap plate and a second cap plate. The first cap plate is electrically connected to the battery cell and has one of a negative polarity or a positive polarity, and the second cap plate is electrically connected to the battery cell and has the other one of a negative polarity and a positive polarity.

## Description

### BACKGROUND

### 1. Field

Aspects of embodiments of the present disclosure relate to a bidirectional rechargeable battery pack, a drone having same, and a battery pack charging station.

### 2. Description of the Related Art

Generally, a drone is a kind of aircraft that flies in the sky by rotating a plurality of propellers (also called rotors) using battery power and is configured to enable flight in various patterns according to user's remote control operation. To fly a drone, the plurality of propellers must rotate very quickly, which results in relatively high battery consumption, and accordingly, there is a disadvantage in that the battery must be continuously replaced or recharged. Generally, replacing or charging drone batteries is done manually by users. In particular, because the direction (or orientation) of positive and negative poles of a battery are fixed, when batteries are mounted on a drone, the directions of polarities must be matched. Thus, battery replacement in the drone is difficult to be automated.

The above information disclosed in this Background section is for enhancement of understanding of the background of the present disclosure, and therefore, it may contain information that does not constitute prior art.

### SUMMARY

Embodiments of the present disclosure provide a bidirectional rechargeable battery pack, a drone having same, and a battery pack charging station.

A battery pack, according to an embodiment of the present disclosure, includes: a battery cell including a negative electrode and a positive electrode; a case accommodating the battery cell; and a pair of cap assemblies at both ends of the case. Each of the cap assemblies includes a first cap plate and a second cap plate. The first cap plate is electrically connected to the battery cell and has one of a negative polarity or a positive polarity, and the second cap plate is electrically connected to the battery cell and has the other one of a negative polarity and a positive polarity.

The battery cell may include a plurality of battery cells.

The negative electrode may be at one end of the battery cell, and the positive electrode may be at another end of the battery cell.

The negative electrode and the positive electrode may be at one end of the battery cell, and another negative electrode and another positive electrode may be at another end of the battery cell.

The battery pack may further include: a negative electrode lead wire connecting the negative electrode of the battery cell with one of the first cap plate or the second cap plate; and a positive electrode lead wire connecting the positive electrode of the battery cell and the other one of the first cap plate or the second cap plate.

The negative electrode lead wire and the positive electrode lead wire may not overlap each other.

A battery pack charging station, according to an embodiment of the present disclosure, includes: a main body having a plurality of receiving units for accommodating the battery pack as described above; and a charging circuit unit inside the main body and configured to be electrically connected to the battery pack to charge the battery pack.

The charging circuit unit may include a charging terminal exposed at an inside of the receiving units.

The charging terminal may include a negative electrode terminal and a positive electrode terminal.

A drone, according to an embodiment of the present disclosure, includes: a main body having a mounting unit configured to receive the battery pack as described above; and a circuit unit inside the main body and configured to be electrically connected to the battery pack.

The circuit unit may include a connection terminal exposed at an inside of the mounting unit.

The connection terminal may include a negative electrode terminal and a positive electrode terminal.

The drone may further include an internal battery mounted inside the main body and configured to be supplied with power from the battery pack.

At least some of the above and other features of the invention are set out in the claims.

### BRIEF DESCRIPTION OF DRAWINGS

FIGS. 1 and 2 are schematic diagrams showing battery packs according to embodiments of the present disclosure.
FIG. 3 is a schematic diagram showing an internal configuration of the battery packs shown in FIGS. 1 and 2.
FIGS. 4 and 5 are perspective views schematically showing battery packs according to other embodiments of the present disclosure.
FIG. 6 is a schematic diagram showing an internal configuration of the battery packs shown in FIGS. 4 and 5.
FIGS. 7 and 8 are schematic diagrams showing battery pack charging stations according to embodiments of the present disclosure.
FIG. 9 is a schematic diagram showing a structure of the battery pack charging stations shown in FIGS. 7 and 8.
FIG. 10 is a schematic diagram showing battery pack replacement in a drone according to an embodiment of the present disclosure.

### DETAILED DESCRIPTION

Embodiments of the present disclosure are provided to more completely explain aspects and features of the present disclosure to those skilled in the art, and the following embodiments may be modified in various other forms. In other words, the present disclosure may be embodied in many different forms and should not be construed as being limited to the embodiments set forth herein. Rather, these embodiments are provided so that this disclosure will be thorough and complete and will fully convey the aspects and features of the present disclosure to those skilled in the art.

In the accompanying drawings, sizes or thicknesses of various components may be exaggerated for brevity and clarity. Like numbers refer to like elements throughout. As used herein, the term "and/or" includes any and all combinations of one or more of the associated listed items. In addition, it will be understood that when an element A is referred to as being "connected to" an element B, the element A can be directly connected to the element B or an intervening element C may be present therebetween such that the element A and the element B are indirectly connected to each other. Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

The terminology used herein is for the purpose of describing particular embodiments only and is not intended to be limiting of the disclosure. As used herein, the singular forms are intended to include the plural forms as well, unless the context clearly indicates otherwise. It will be further understood that the terms "comprise" or "include" and/or "comprising" or "including," when used in this specification, specify the presence of stated features, numbers, steps, operations, elements, and/or components but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present disclosure.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the exemplary term "below" can encompass both an orientation of above and below.

Hereinafter, a bidirectional rechargeable battery pack, a drone having the same, and a battery pack charging station, according to embodiments of the present disclosure, will be described, in detail, with reference to the accompanying drawings.

First, a battery pack according to embodiments of the present disclosure will be described.

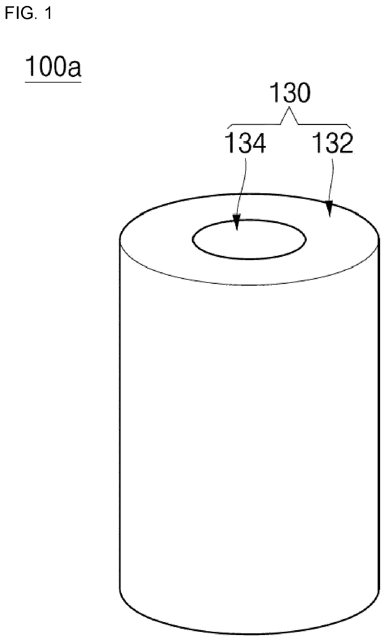

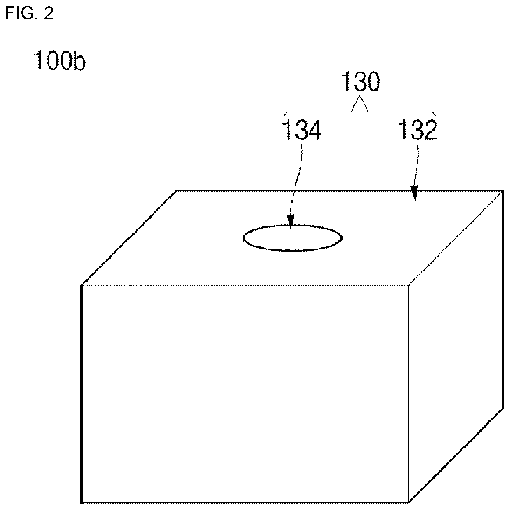

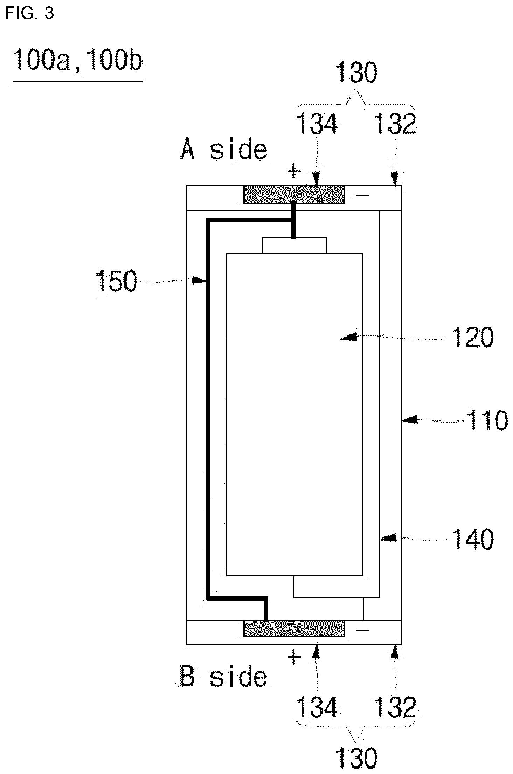

FIGS. 1 and 2 are schematic diagrams showing an outer appearance of battery packs according to embodiments of the present disclosure, and FIG. 3 is a schematic diagram showing an internal configuration of the battery packs shown in FIGS. 1 and 2.

Referring to FIGS. 1 and 3, a battery pack 100a, according to an embodiment of the present disclosure, may be configured such that one battery cell 120 is accommodated in a cylindrical case 110. In another embodiment, referring to FIGS. 2 and 3, a battery pack 100b may be configured such that one battery cell 120 is accommodated in a hexahedral case 110.

The cases 110 shown in FIGS. 1 and 2 have a different appearance but may have the same internal structure. Each of the case 110 forms an accommodation space therein to accommodate the battery cell 120. Cap assemblies 130 may be provided at upper and lower portions (or ends) of the cases 110, respectively.

The cap assemblies 130 may include a first cap plate 132 and a second cap plate 134 in the shape of a disk or a rectangular plate corresponding to the shape of the case 110. For example, the first cap plate 132 may be a negative electrode cap plate electrically connected to a negative electrode of the battery cell 120, and the second cap plate 134 may be a positive electrode cap plate electrically connected to a positive electrode of the battery cell 120. However, in other embodiments, the first cap plate 132 may be a positive cap plate and the second cap plate 134 may be a negative cap plate. In some embodiments, the size of the first cap plate 132 may be larger than that of the second cap plate 134, a hollow may be formed in the center of the first cap plate 132, and the second cap plate 134 may be inserted into the hollow, or vice versa.

A pair of cap assemblies 130 respectively provided on the upper and lower portions of the case 110 may have the same structure and may be symmetrically disposed. Therefore, when the first cap plate 132 is a negative electrode cap plate, as shown in FIG. 3, the pair of (both of the) first cap plates 132 may be connected to the negative electrode of the battery cell 120 by at least one negative electrode lead wire 140, respectively. When the second cap plate 134 is a positive electrode cap plate, as shown in FIG. 3, the pair of (both of the) second cap plates 134 may be connected to the positive electrode of the battery cell 120 by at least one positive electrode lead wire 150, respectively. The negative electrode lead wire 140 and the positive electrode lead wire 150 are disposed so as not to overlap each other.

The first cap plate 132 and the second cap plate 134 may be insulated from each other by an insulator, and/or the first cap plate 132 and the case 110 may be insulated from each other by an insulator. Because the battery pack 100a has positive and negative electrodes on both sides thereof (e.g., on both ends thereof), upper and lower surfaces are essentially indistinguishable. Accordingly, in FIG. 3, for convenience, the upper surface of the battery pack 100a is indicated as the A side and the lower surface is indicated as the B side. That is, as shown in FIG. 3, in the battery pack 100a, positive and negative electrodes are present on the A side, and positive and negative electrodes are also present on the B side. Thus, charging and discharging are possible in either direction (e.g., are possible regardless of the orientation of the battery pack 100a).

The battery cell 120 may be applied regardless of the shape thereof and may be, for example, a cylindrical battery, a prismatic battery, or a pouch-shaped battery. The battery cell 120 may include an electrode assembly and an electrolyte accommodated together in a cylindrical, prismatic, or pouch-type cell case.

A positive terminal may be provided at one end of the battery cell, and a negative terminal may be provided at the other end of the battery cell. Alternatively, positive and negative terminals may be provided at one end of the battery cell, and positive and negative terminals also may be provided at the other end of the battery cell.

The electrode assembly includes a negative electrode plate, a positive electrode plate, and a separator. The negative electrode plate includes a metal foil made of copper (Cu) or nickel (Ni) that is coated with a negative electrode active material, such as graphite or carbon on at least one surface thereof. The positive electrode plate includes a metal foil made of aluminum (Al) that is coated with a positive electrode active material made of a transition metal oxide on at least one surface thereof. The negative electrode plate and the positive electrode plate may each have a non-coating portion that is not coated with an active material. The separator may be interposed between the negative electrode plate and the positive electrode plate to prevent an electrical short between them while allowing lithium ions to move therebetween. The electrode assembly is formed by winding or stacking the negative electrode plate, the positive electrode plate, and the separator interposed therebetween. The electrode assembly is accommodated in a cell case together with an electrolyte, and a negative electrode terminal and a positive electrode terminal formed in the cell case may be electrically connected to the electrode assembly through respective uncoated portions. The respective uncoated portions may be electrically connected to the negative electrode terminal and the positive electrode terminal by lead wires or current collector plates. FIGS. 1 to 3 show an embodiment in which one battery cell 120 is accommodated in the case 110 to form the battery pack 100a. However, the battery pack 100a may include a plurality of battery cells 120.

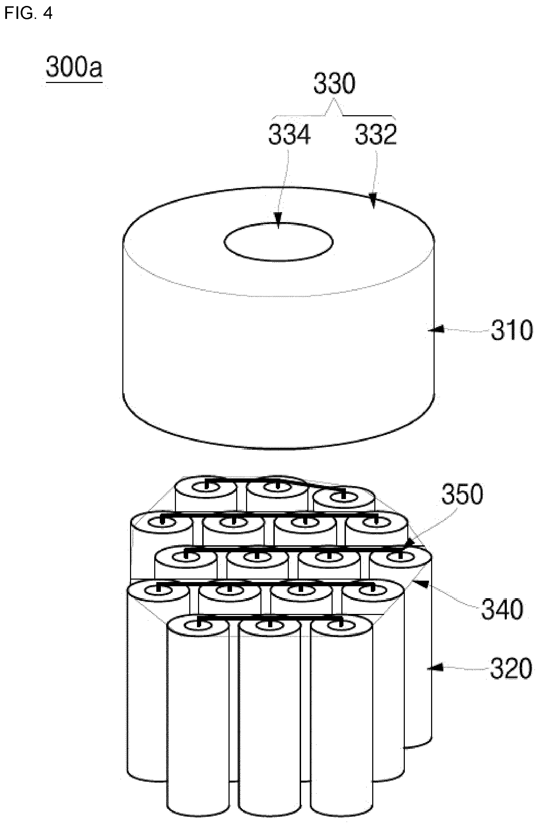

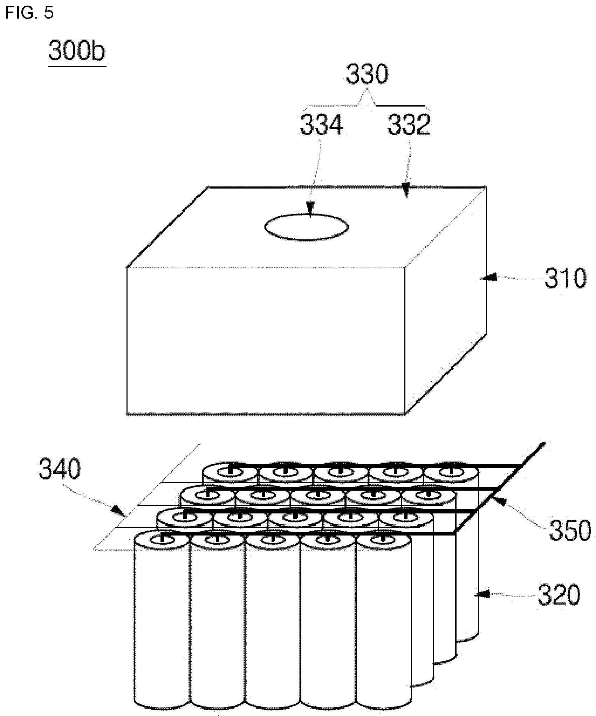

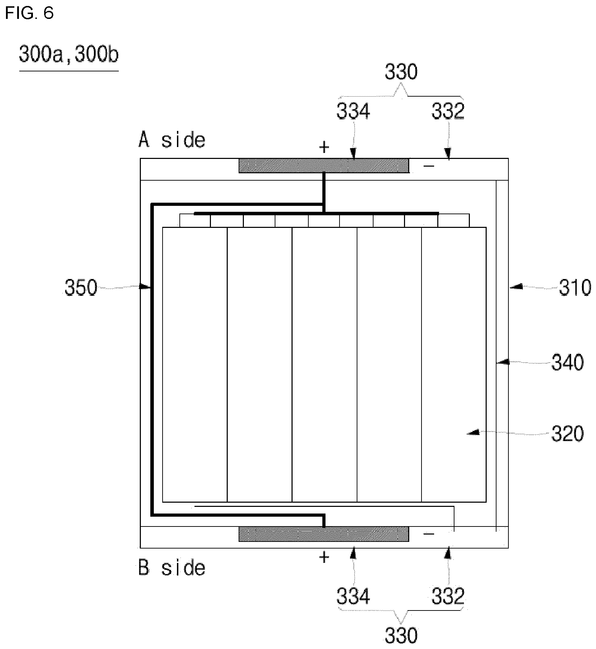

FIGS. 4 and 5 are perspective views schematically showing battery packs according to other embodiments of the present disclosure. FIG. 6 is a schematic diagram showing an internal configuration of the battery pack shown in FIGS. 4 and 5.

Referring to FIG. 4, a battery pack 300a, according to an embodiment of the present disclosure, may be configured such that a plurality of battery cells 320 are accommodated in a cylindrical case 310. In another embodiment, referring to FIG. 5, a battery pack 300b, according to an embodiment of the present disclosure, may be configured such that a plurality of battery cells 320 are accommodated in a hexahedral case 310. The battery cells 320 may be arranged in a single layer (one step) or may be arranged in multiple layers (multi-steps).

The cases 310 shown in FIGS. 4 and 5 have a different appearance but may have the same internal structure. Each of the cases 310 forms an accommodation space therein to accommodate the battery cells 320. Cap assemblies 330 may be provided at upper and lower portions of the cases 310, respectively.

The cap assemblies 330 may include a first cap plate 332 and a second cap plate 334 and may have the same structures as those of the previous embodiment. Thus, a detailed description thereof will be omitted. In addition, because each of the plurality of battery cells 320 is the same as in the foregoing embodiment, a detailed description thereof will be omitted.

The negative electrode of each of the plurality of battery cells 320 may be electrically connected by a negative electrode lead wire 340 and electrically connected to the first cap plate 332. The positive electrode of each of the plurality of battery cells 320 may be electrically connected by a positive electrode lead wire 350 and electrically connected to the second cap plate 334. The negative electrode lead wire 340 and the positive electrode lead wire 350 are wire are disposed so as not to overlap each other. In the embodiments shown in FIGS. 4 and 5, the negative electrode lead wire 340 is connected to the negative electrode located at a lower portion of the battery cell 320, but, for ease of understanding, it is shown at an upper portion of the battery cell 320. In an embodiment including one or more battery cells in which the negative electrode and the positive electrode are both located on the upper portion, the negative electrode lead wire and the positive electrode lead wire may be both disposed on the upper portion. In an embodiment including one or more battery cells in which the negative electrode and the positive electrode are both located on the lower portion, the negative electrode lead wire and the positive electrode lead wire may be both disposed on the lower portion.

As described above, because the battery pack 300a, 300b has both a positive electrode and a negative electrode disposed on the A and B surfaces, respectively, charging and discharging can be performed in either direction. In addition, although in the foregoing embodiment, a structure in which a battery pack can be charged and discharged in both directions has been described, a single battery cell may have a structure in which bidirectional charging and discharging is possible.

Hereinafter, a charging station for charging a battery pack and a method for replacing a battery pack of a drone according to embodiments of the present disclosure will be described.

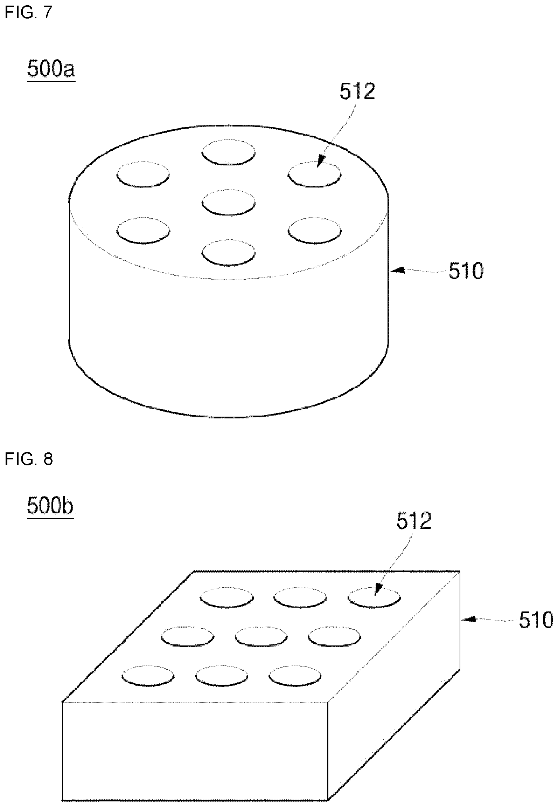

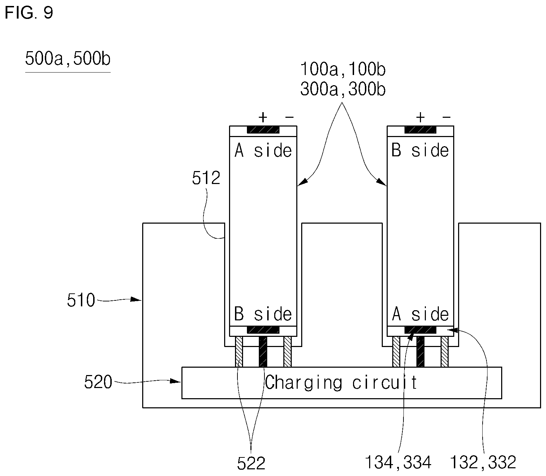

FIGS. 7 and 8 are schematic diagrams showing battery pack charging stations according to embodiments of the present disclosure. FIG. 9 is a schematic diagram showing a structure of the battery pack charging stations shown in FIGS. 7 and 8.

Referring to FIGS. 7 and 8, battery pack charging stations 500a and 500b may each include a station main body 510, a plurality of receiving units 512 formed on one side of the station main body 510, and a charging circuit unit 520 provided inside the station main body 510.

The station main body 510 may be formed in various shapes including, for example, a cylindrical shape and a hexahedral shape. The receiving units 512 may be formed on (or in) the upper side of the station main body 510, and the charging circuit unit 520 may be installed therein.

The receiving units 512 are spaces for accommodating (e.g., for respectively accommodating) a plurality of battery packs, and each of the receiving units 512 has one end communicating with the outside and the other end connected to the charging circuit unit 520. The receiving units 512 may be configured to correspond to the shapes of the battery packs 100a, 100b, 300a, and 300b. For example, the receiving units 512 may form accommodation spaces having a cylindrical or hexahedral shape. The battery packs 100a, 100b, 300a, and 300b may be connected to charging terminals 522 of the charging circuit unit 520 at inner lower ends of (e.g., at a bottom of) the receiving units 512.

As shown in FIG. 9, the charging circuit unit 520 is electrically connected to the battery packs 100a, 100b, 300a, and 300b and has mounted therein a charging circuit and various components for charging the battery packs 100a, 100b, 300a, and 300b. The charging circuit unit 520 may be configured in the same manner as or in a similar manner to charging units mounted in devices for charging a conventional battery pack. The charging circuit unit 520 may have charging terminals 522 corresponding to the number of receiving units 512. To this end, the charging terminals 522 may be exposed at the inner lower ends of the receiving units 512. The charging terminals 522 may include a negative electrode terminal and a positive electrode terminal electrically connected to a first cap plate 132 and a second cap plate 134 of each of the battery packs 100a, 100b, 300a, and 300b, respectively. Therefore, when the battery packs 100a, 100b, 300a, and 300b are mounted in the respective receiving units 512, the first cap plate 132 and the second cap plate 134 of the battery pack 100a, 100b, 300a, 300b are brought into contact with the negative electrode terminal and the positive electrode terminal, respectively. Thus, charging can be performed. In the battery packs 100a, 100b, 300a, and 300b, the first cap plate 132 and the second cap plate 134 having a negative polarity and a positive polarity are provided at opposite ends, respectively. Accordingly, the battery packs 100a, 100b, 300a, and 300b can be charged regardless of which side of the battery pack 100a, 100b, 300a, or 300b faces the charging terminals 522.

The battery pack charging station having the above-described configuration may be used for replacement of a battery pack for a drone. As referred to herein, the drove may be considered as having any conventional drone structure, and thus, a detailed description thereof is omitted.

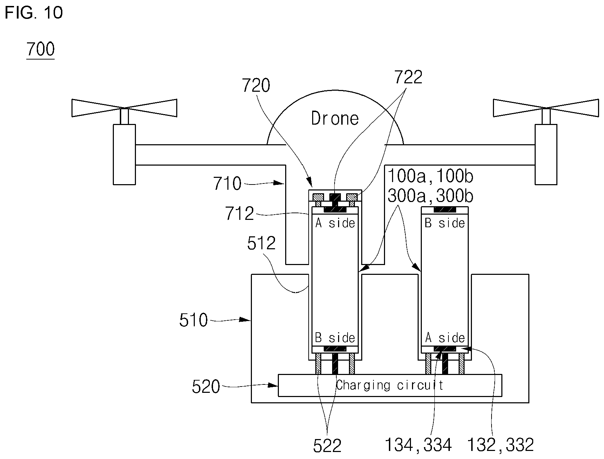

FIG. 10 is a schematic diagram showing battery pack replacement in a drone according to an embodiment of the present disclosure.

As shown in FIG. 10, a drone 700 may include a main body 710 having a mounting unit 712 in (or on) which battery packs 100a, 100b, 300a, and 300b are mounted and a circuit unit 720 provided inside the main body 710 and having connection terminals 722.

The mounting unit 712 is an accommodation space in which one or more battery packs 100a, 100b, 300a, and 300b are accommodated. Cap assemblies 130 (see, e.g., FIG. 3) of the battery packs 100a, 100b, 300a, and 300b may be exposed to the outside of the mounting unit 712 or may be completely inserted into (or completely accommodated in) the mounting unit 712. In FIG. 10, for ease of understanding, the amount of the battery packs 100a, 100b, 300a, and 300b that is exposed outside of the mounting unit 712 is exaggerated. In an embodiment in which the battery packs 100a, 100b, 300a, and 300b are not exposed to the outside of the mounting unit 712, the cap assemblies 130 of the battery packs 100a, 100b, 300a, and 300b may be operated (or moved) to be exposed to the outside of the mounting unit 712 when the drone 700 approaches the charging stations 500a and 500b. The connection terminals 722 connected to the circuit unit 720 may be exposed at one side of (e.g., at one end of) the mounting unit 712. The connection terminals 722 may include negative electrode and positive electrode terminals that may be connected to the first cap plate 132 and the second cap plate 134 of the battery packs 100a, 100b, 300a, and 300b. Therefore, when the battery packs 100a, 100b, 300a, 300b are mounted in the mounting unit 712, the first cap plate 132 and the second cap plate 134 of the battery packs 100a, 100b, 300a, and 300b are brought into contact with the negative and positive electrode terminals, respectively, so that the drone 700 is able to use the power from the battery packs 100a, 100b, 300a, and 300b. In the battery packs 100a, 100b, 300a, and 300b, the first cap plate 132 and the second cap plate 134 having a negative polarity and a positive polarity are provided at both opposite ends. Accordingly, the battery packs 100a, 100b, 300a, and 300b can supply power to the drone 700 regardless of which side of the battery pack 100a, 100b, 300a, or 300b faces the connection terminals 722.

When the discharge amount of the battery packs 100a, 100b, 300a, and 300b is less than a reference (or preset) percent, the drone 700 may approach the charging stations 500a and 500b. Thereafter, the drone 700 may mount (e.g., may load) the discharged battery packs 100a, 100b, 300a, and 300b into the receiving units 512 in the charging stations 500a and 500b. When the battery packs 100a, 100b, 300a, and 300b are mounted in the receiving units 512, the battery packs 100a, 100b, 300a, and 300b may be automatically separated from the drone 700. After the battery packs 100a, 100b, 300a, and 300b are separated, the drone 700 can fly to an adjacent receiving unit 512 and mount one or more fully charged battery packs 100a, 100b, 300a, and 300b in the mounting unit 712. Even after the battery packs 100a, 100b, 300a, and 300b are separated from the drone 700, the drone 700 should be able to fly to the adjacent receiving unit 512, and thus, internal batteries for supplying auxiliary power may be provided inside the drone 700. The internal batteries may be maintained at charge amounts enough to enable a minimum flight. The internal batteries can receive power from the battery packs 100a, 100b, 300a, and 300b. When the fully charged battery packs 100a, 100b, 300a, and 300b are mounted, the drone 700 may resume flight by receiving power from the battery packs 100a, 100b, 300a, and 300b.

As described above, according to embodiments of the present disclosure, because a negative electrode and a positive electrode are provided at both sides (e.g., at both ends) of the battery pack, a drone can be operated regardless of which direction the battery pack is installed. In addition, because a charging station for a bidirectional rechargeable battery pack is provided, the battery pack can be charged regardless of the direction and battery replacement of the drone can be automated.

The foregoing embodiments are only some embodiments for carrying out the present disclosure, which is not limited thereto. It will be understood by a person skilled in the art that various changes in form and details may be made therein without departing from the scope of the present disclosure as defined by the following claims and their equivalents.

## Claims

1. A battery pack comprising:
a battery cell comprising a negative electrode and a positive electrode;
a case accommodating the battery cell; and
a pair of cap assemblies at both ends of the case, each of the cap assemblies comprising a first cap plate and a second cap plate, the first cap plate being electrically connected to the battery cell and having one of a negative polarity or a positive polarity, and the second cap plate being electrically connected to the battery cell and having the other one of a negative polarity and a positive polarity.

2. The battery pack as claimed in claim 1, wherein the battery cell comprises a plurality of battery cells.

3. The battery pack as claimed in claim 1 or 2, wherein the negative electrode is at one end of the battery cell, and the positive electrode is at another end of the battery cell.

4. The battery pack as claimed in claim 1 or 2, wherein the negative electrode and the positive electrode are at one end of the battery cell, and another negative electrode and another positive electrode are at another end of the battery cell.

5. The battery pack as claimed in any preceding claim, further comprising:
a negative electrode lead wire connecting the negative electrode of the battery cell with one of the first cap plate or the second cap plate; and
a positive electrode lead wire connecting the positive electrode of the battery cell and the other one of the first cap plate or the second cap plate.

6. The battery pack as claimed in claim 5, wherein the negative electrode lead wire and the positive electrode lead wire do not overlap each other.

7. A battery pack charging station comprising:
a main body having a plurality of receiving units for accommodating the battery pack as claimed in any preceding claim; and
a charging circuit unit inside the main body and configured to be electrically connected to the battery pack to charge the battery pack.

8. The battery pack charging station as claimed in claim 7, wherein the charging circuit unit comprises a charging terminal exposed at an inside of the receiving units.

9. The battery pack charging station as claimed in claim 8, wherein the charging terminal comprises a negative electrode terminal and a positive electrode terminal.

10. A drone comprising:
a main body having a mounting unit configured to receive the battery pack as claimed in any of claims 1 to 6; and
a circuit unit inside the main body and configured to be electrically connected to the battery pack.

11. The drone as claimed in claim 10, wherein the circuit unit comprises a connection terminal exposed at an inside of the mounting unit.

12. The drone as claimed in claim 11, wherein the connection terminal comprises a negative electrode terminal and a positive electrode terminal.

13. The drone as claimed in any of claims 10 to 12, further comprising an internal battery mounted inside the main body and configured to be supplied with power from the battery pack.
